# EUROPEAN PATENT SPECIFICATION

(11) **EP 2 978 321 B1**
(45) Date of publication and mention of the grant of the patent: **01.06.2016**
(21) Application number: 14710224.8
(22) Date of filing: 07.03.2014
(51) Int. Cl.: A23F 3/10, A23F 3/14, A23F 3/16

(54) **PROCESS FOR MANUFACTURING TEA PRODUCTS**
VERFAHREN ZUR HERSTELLUNG VON TEEPRODUKTEN
PROCESSUS DE FABRICATION DE PRODUITS DE THÉ

(30) Priority: 27.03.2013 EP 13161398
(43) Date of publication of application: 03.02.2016
(73) Proprietor: Unilever PLC, London, Greater London EC4Y 0DY (GB); Unilever N.V., 3013 AL Rotterdam (NL)
(72) Inventor: MUTUA MUTUKU, John, Kericho 20200 (KE); SHARP, David, George, Bedford Bedfordshire MK44 1LQ (GB)
(74) Representative: Askew, Sarah Elizabeth
(86) International application number: PCT/EP2014/054450
(87) International publication number: WO 2014/154469

(56) References cited:
- WO-A1-2008/040627
- US-A1- 2009 117 229
- US-A1- 2009 117 251
- US-A1- 2010 086 642

## Description

### TECHNICAL FIELD OF THE INVENTION

The present invention relates to a process for manufacturing two different tea products, in particular unfermented (green) tea juice and fermented (black) leaf tea, from a single source of fresh tea leaves.

### BACKGROUND TO THE INVENTION

Beverages based on the tea plant (*Camellia sinensis*) have been popular throughout the world for many hundreds of years. Most of the tea consumed in the Western world is black tea, which is obtained by harvesting leaves of the tea plant and withering, rolling, enzymatically oxidizing (fermenting), firing and sorting them. Green (unfermented) tea is widely consumed in parts of the People's Republic of China, Japan, North Africa and the Middle East. Traditionally such beverages are produced by infusing leaf tea in hot water. However, green leaf tea is typically slow to infuse and therefore is not compatible with the Western desire for convenience.

Although many consumers still enjoy beverages made from leaf tea, consumers are also increasingly interested in beverages which have a natural image and/or contain high levels of bioactive compounds and/or can be made without waiting a long time for leaf tea to infuse. In view of this, efforts have been made to manufacture tea products from juice expressed from tea leaves.

WO 2009/059926 discloses a process wherein fresh tea leaves are pressed to produce tea juice and green leaf tea. Fermentation is prevented by an enzyme deactivation treatment (e.g. steaming). Two alternative processes are disclosed. In one process the fresh tea leaves are subjected to the enzyme deactivation step before pressing. This process results in green leaf tea and green tea juice. In the other process expression takes place first, and then the leaf residue is subjected to the enzyme deactivation step immediately following pressing, whereas the juice is allowed to at least partially ferment. This process results in green leaf tea and black or oolong (partially fermented) tea juice.

WO 2009/059927 discloses a process in which juice is expressed from fermented dhool thereby to produce black tea juice and leaf residue, which is further processed to produce black leaf tea. In one example, expression takes place at the start of the fermentation step, to produce substantially unfermented juice. However, this unfermented juice has a different taste and character to green tea juice produced by pressing leaves which have been steamed.

Thus there remains a need to produce black leaf tea and green tea juice which has the taste of a steamed green tea juice in a single process.

### SUMMARY OF THE INVENTION

We have now devised a process which allows black leaf tea and green tea juice having a steamed taste to be produced from the same source of tea leaves in a single process. Accordingly, in a first aspect, the present invention provides a process for producing tea products, the process comprising:
- providing fresh whole tea leaves;
- placing the tea leaves into a press, and pressing the leaves thereby to produce tea juice and leaf residue, whilst applying steam to the outside of the press, so that the steam comes into contact with the juice as it leaves the press;
- collecting the juice; and
- processing the leaf residue to produce black tea.

With previous processes for producing green tea juice with a steamed taste, it has not been possible for the leaf residue to be processed into black leaf tea. By means of the present invention, steamed green tea juice can be produced whilst the leaf residue can be processed into black leaf tea. This is particularly advantageous because switching a factory between production of black leaf tea and green leaf tea requires the equipment to be cleaned, so that there is no contamination of one type of tea with the other. Cleaning the equipment typically results in the loss of a day's production. The process of the invention allows the factory to produce green tea juice whilst continuing to produce black leaf tea, so that there is no need to stop production to clean the equipment. Moreover, steamed green tea juice can be produced without needing a separate steaming step before pressing, and without requiring separate equipment in which to steam the fresh tea leaves.

We have found that the green tea juice produced by this process has a similar taste to green tea juice produced by pressing tea leaves which have been steamed. Moreover the juice has a relatively high theanine content. Thus in a second aspect, the invention provides a green tea juice obtained and/or obtainable by the process of the first aspect of the invention, which contains greater than 3.0% theanine by weight of the total tea solids, and wherein the weight ratio of theanine to total polyphenols is less than 1:6.

### DETAILED DESCRIPTION

"Tea" for the purposes of the present invention means material from *Camellia sinensis* var. *sinensis* and/or *Camellia sinensis* var. *assamica.* Especially preferred is material from var. *assamica* as this has a higher level of tea actives than var. *sinensis.* "Green tea" refers to substantially unfermented tea. "Black tea" refers to substantially fermented tea. "Oolong tea" refers to partially fermented tea. "Fermentation" refers to the oxidative and hydrolytic process that tea undergoes when certain endogenous enzymes and substrates are brought together. During this process colourless catechins in the leaves are converted to a complex mixture of yellow and orange to dark-brown polyphenolic substances. The term "catechins" is used as a generic term for catechin, gallocatechin, catechin gallate, gallocatechin gallate, epicatechin, epigallocatechin, epicatechin gallate, epigallocatechin gallate, and mixtures thereof.
In the first step of the process, fresh tea leaves are provided. "Fresh tea leaves" refers to tea leaves and/or stem that have never been dried to a water content of less than 60% by weight, and usually have a water content of from 60 to 90%, preferably at least 70%. Prior to expression, the fresh tea leaves may undergo withering. However, in order that the amount of moisture lost from the leaves before pressing is minimised, the tea leaves are preferably not subjected to a physical withering step, such as placing the tea leaves in a withering trough and / or blowing air through the tea leaves.

"Whole tea leaves" refers to tea leaves that have not been cut, chopped or macerated prior to expression. Cutting / chopping / maceration would result in mechanical disruption of the cells which can cause fermentation to start in the tea leaves before the juice is expressed and also can result in loss of moisture from the leaves.

Preferably the fresh whole tea leaves contain less than 50% by weight of stem material, more preferably less than 25 wt% stem. "Stem" means the elongate tea plant material which is not part of the leaf proper. A conventional pluck results in around 10-15% stem by weight of the total tea material.

In the next step, the tea leaves are placed into a press, in order to express juice from them. As used herein the term "press" refers to equipment which applies pressure to the tea leaves, resulting in the required quantity of juice. The press must also allow separation of the tea juice from the leaf residue, so that steam can be applied to the juice as it leaves the press but does not come into direct contact with the leaf residue inside the press. The press may, for example, be a hydraulic press, a pneumatic press, a screw press, a belt press, or a combination thereof.

The term "expressing juice" refers to squeezing out juice from fresh tea leaves using physical force, as opposed to extraction of tea solids with the use of a solvent. Thus the term "expressing" encompasses such means as squeezing, pressing, wringing, spinning and extruding. It is possible that a small amount of solvent (e.g. water) is added to the tea leaves during the expression step. However, in order to prevent significant extraction of tea solids by the solvent, the moisture content of the tea leaves during expression is essentially that of fresh tea leaves as defined hereinabove. In other words, during the expression step, the moisture content of the fresh tea leaves is at least 60 wt%, more preferably at least 70%, and preferably less than 90%. It is also preferred that the fresh leaves are not contacted with non-aqueous solvent (e.g. alcohols) prior to or during expression.

The juice may be obtained from the fresh leaves in a single pressing or in multiple pressings. Preferably the juice is obtained from a single pressing as this allows for a simple and rapid process. The time and pressure used in the expression step can be varied to yield the required amount of juice. Typically the pressure applied to express the juice will range from 0.5 MPa (73 psi) to 10 MPa (1450 psi). The time over which the pressure is applied typically ranges from 1s to 1 hour, more preferably from 10s to 20 minutes and most preferably from 30s to 5 minutes. After expression, the juice is collected, and preferably decanted and / or centrifuged in order to remove any suspended insoluble tea particles.

If the amount of juice expressed is too low then it becomes difficult to separate the juice from the leaf residue and/or the process becomes inefficient. Thus it is preferred that the amount of expressed juice is at least 50 ml per kg of the fresh tea leaves, more preferably at least 100 ml, more preferably still at least 200 ml and most preferably at least 300 ml. When referring to the volume of juice expressed per unit mass of tea leaves it should be noted that the mass of the tea leaves is expressed on an "as is" basis and not a dry weight basis. Thus the mass includes the moisture in the leaves.

We have found that a large amount of juice can be expressed from the leaves without compromising the quality of the black tea made from the leaf residue, despite the fact that the leaf residue after expression has a lower overall level of tea compounds such as polyphenols and amino acids. Without wishing to be limited by theory, it is believed that this is due to the fact that the leaves are not chopped or macerated, so that the leaves do not lose much moisture before expression. In a preferred embodiment, the leaves are not subjected to a physical withering step before expression, in order to retain as much moisture as possible within the tea leaves. Nonetheless, if the amount of juice expressed is too high then the black leaf tea made from the leaf residue is of a poorer quality. Thus the amount of expressed juice is preferably less than 500 ml per kg of fresh leaves, more preferably less than 400 ml.

Applying steam to the outside of the press causes the juice to come into contact with the steam, thereby heating the juice so that the enzymes in the juice are deactivated. Consequently, the juice does not undergo fermentation. Preferably the steam heats the juice to a temperature of at least 70°C, more preferably 75-80°C. This temperature is sufficient to deactivate the enzymes, thus retaining most of the catechins in the juice. Preferably the weight ratio of catechins to total polyphenols in the juice is at least 0.50:1, more preferably at least 0.60:1 and most preferably from 0.70 to 0.99:1. The temperature of the outside of the press is high enough to pasteurize the juice. Also, the possibility of microbial growth on the outside of the press is reduced. Thus there is no need to clean the press every few hours as there would be in conventional pressing conditions where steam is not applied to the outside of the press.

The leaf residue inside the press does not come into contact with the steam and is therefore at a lower temperature than the juice. Thus the enzymes in the leaf residue are not deactivated, so that fermentation of the leaf residue can take place. In particular, the temperature of the leaf residue inside the press is preferably less than 60°C, more preferably less than 55°C, most preferably around 50°C.

We have found that green tea juice of the invention has a similar character to green tea juice produced by first steaming tea leaves to deactivate the enzymes, and then subsequently pressing them. Thus the juice of the present invention has some sencha character and has a typical steamed green tea appearance.

We have also found that the green tea juice of the invention has a relatively high theanine content, namely greater than 3.0% by weight of the total tea solids, whereas typical green tea infusions contain from about 1 to 2.5%. Tea juice which is very rich in theanine is disclosed in WO 2009/059925. This juice is produced by pressing fresh tea material which comprises large amounts of stem (such as at least 50 wt% of stem). This requires sorting the tea material to increase the proportion of stem. Moreover, the use of stem results in a very high weight ratio of theanine to total polyphenols, i.e. at least 1:4. The green tea juice of the invention contains greater than 3.0% theanine by weight of the total tea solids, preferably at least 3.1%, more preferably at least 3.2%. The green tea juice of the invention has a lower ratio of theanine to total polyphenols than that of the juice produced from stem, in particular at most 1:6, more preferably from 1:8 to 1:20, and most preferably from 1:10 to 1:15.

From a standpoint of microbial stability, it is preferred that the tea juice is packaged after expression. In particular the package is sealed so that it is impermeable to microbiological contaminants, by which is meant that the packaged juice can be stored for at least 6 months at a temperature of 20°C without the amount of spore-forming bacteria (*Bacillus* and *Clostridia spp*) in the juice increasing above 100 colony forming units (cfu) / ml. Suitable packages include bottles, cans, cartons, pouches and sachets. In a particularly preferred embodiment, the juice is packaged in unit doses, wherein each unit dose is suitable for dilution to make a tea beverage.

In a preferred embodiment the package is in the form of a sachet having a hollow tubular body enclosed at one end by a first transverse seal and at another end by a second transverse seal. For example the package may be a pillow-shaped or tetrahedral-shaped sachet. For pillow-shaped sachets the transverse seals are substantially parallel to each other, whilst for tetrahedral-shaped sachets the transverse seals are substantially perpendicular to each other. Most preferably the package is tetrahedral shaped as this allows for easier handling of the package. Sachets are typically formed from flexible packaging material. The most preferred packaging material is plastic-foil laminate material, especially material comprising a metal (such as aluminium) foil layer sandwiched between two or more plastic (such as polyethylene terephthalate, polyethylene, polypropylene or combinations thereof) layers.

Although the juice is pasteurized by the steam as it leaves the press, it may nonetheless be subjected to a separate sanitisation step such as pasteurisation or UHT treatment, for example shortly before and / or after packaging. For example the juice may be sanitised and dosed into a previously-sanitised package under sterile conditions. Additionally or alternatively the filled package may be subjected to a santisation step, for example by in-pack pasteurisation or retorting.

The present invention provides beverages obtained and/or obtainable by diluting the tea juice with an aqueous liquid, preferably water. The term "beverage" refers to a substantially aqueous drinkable composition suitable for human consumption. Since the tea juice is typically relatively rich in tea solids, it can usually be diluted many-fold whilst still imparting tea flavour to the resulting beverage. Thus the juice is preferably diluted by a factor of 5 to 50 by weight, more preferably by a factor of 10 to 40 and most preferably by a factor of 15 to 35. Beverages produced using the green tea juice of the invention contain more theanine than a conventional green tea infusion.

The leaf residue is processed to produce black leaf tea. The manufacturing process of black leaf tea is well known and is described, for example, in "Tea: Cultivation to Consumption", K.C. Willson and M.N. Clifford (Eds), 1st Edn, 1992, Chapman & Hall (London), Chapters 13 and 14. In the process of the invention, the leaf residue begins to ferment in the press, as a result of the damage to the leaves during pressing. After pressing, the leaf residue is removed from the press, and is then preferably macerated, for example by CTC, in order to encourage further fermentation. After fermentation, the leaf residue is subjected to a drying step, which also serves to deactivate the enzymes. Efficient drying requires high temperatures and so it is preferred that the leaf residue is dried at a temperature of at least 75°C, more preferably at least 90°C.

It is preferred that the leaf tea manufactured from the leaf residue is sorted, preferably after drying, to achieve a particle size of at least 35 mesh. More preferably the leaf tea is sorted to achieve a particle size of from 30 mesh to 3 mesh. Alternatively or additionally, the leaf tea may be sorted to achieve a leaf tea grade of Pekoe Fannings (PF) grade or larger, more preferably Orange Fannings (OF) or larger and most preferably Broken Orange Pekoe Fannings (BOPF) or larger.

### EXAMPLE

The invention will now be further described with reference to the following example.

Fresh Kenyan tea leaves from *Camellia Sinensis var. assamica* were withered to a moisture content of 74 +/- 2% and fed into a Vincent CP12 press (Vincent Corp., Tampa, Florida, USA). The leaves were not chopped or cut up before pressing. The exterior of the press screen had been pre-heated by the application of steam via a series of externally mounted nozzles. A steam pressure of 3 bar was applied during pressing and the steam flow rate was adjusted to ensure that the temperature of the tea leaves after pressing did not exceed 50°C. The press operated at 12rpm and the resulting yield of juice was 330ml / kg leaves.

The expressed juice was collected and then partially clarified using a Flottweg Z23 decanter before being chilled and frozen. After defrosting the juice was centrifuged to remove any insoluble solids. The juice was measured to contain 8.0 - 8.5% soluble tea solids. The juice was diluted with hot water (5ml juice to 200ml of water) and compared to a beverage made from tea juice prepared by pressing steamed tea leaves (i.e. the process of WO 2009/059926). A group of expert tasters concluded that the beverages were not significantly different from each other in taste.

The leaf residue was removed from the press and passed through 3 CTC machines before being allowed to ferment for 1 hour, using humidified air at 20-22°C. The leaves were then passed through another set of 3 CTC machines and further fermented for 1 hour using humidified air at 25-27°C. After fermentation the tea leaves were dried to a moisture content of less than 5% using a hot air dryer, to produce black leaf tea. This was found to have all the attributes of conventional black leaf tea and was within the normal range of black teas, as assessed by expert tea tasters.

The theanine and total polyphenol contents of several batches of the tea juice were measured (Example 1). The theanine content was determined by reversed phase HPLC chromatography using fluorimetric detection following post-column derivatisation with o-pthalaldehyde (as described in WO 2008/040627). The total polyphenol content of the juice was determined using the Folin-Ciocalteu method as detailed in the International Standard published by the International Organization for Standardization as ISO 14502-1:2005(E). From these, the weight ratio of theanine to total polyphenols was calculated. Tea juice produced by pressing steamed tea leaves (i.e. the process of WO 2009/059926) was also analysed (Example 2). The results are given in Table 1 as mean values of the results from the different batches.

**Table 1**

| Example | Theanine (wt%) | Theanine : total polyphenols |
|---|---|---|
| 1 | 3.3 | 1 : 10.8 |
| 2 | 3.0 | 1: 8.4 |

Thus the tea juice produced by the process of the invention had an increased theanine content compared to the green tea juice of WO 2009/059926.

In summary, the process of the invention results in green tea juice which has a good taste, similar to green tea juice produced from steamed tea leaves, whilst being somewhat richer in theanine. The process also results in good quality black leaf tea.

## Claims

1. A process for producing tea products , the process comprising:
a) providing fresh whole tea leaves;
b) placing the tea leaves into a press, and pressing the leaves, thereby producing tea juice and leaf residue, whilst applying steam to the outside of the press, so that the steam comes into contact with the juice as it leaves the press;
c) collecting the juice; and
d) processing the leaf residue to produce black tea.

2. A process according to claim 1 wherein the fresh whole tea leaves are not subjected to a physical withering step before pressing.

3. A process according to claim 1 or claim 2 wherein the fresh whole tea leaves comprise material from *Camellia sinensis* var. *assamica.*

4. A process according to any of claims 1 to 3 wherein the steam heats the juice to a temperature of at least 70°C.

5. A process according to claim 4 wherein the steam heats the juice to a temperature of from 75 to 80°C.

6. A process according to any of claims 1 to 5 wherein the temperature of the leaf residue inside the press is less than 60°C.

7. A process according to claim 6 wherein the temperature of the leaf residue inside the press is less than 55°C.

8. A process according to any of claims 1 to 7 wherein the amount of expressed juice is from 50 to 500 ml per kg of the fresh whole tea leaves.

9. A process according to claim 8 wherein the amount of expressed juice is from 100 to 400 ml per kg of the fresh whole tea leaves.

10. A green tea juice obtainable by the process of any one of the preceding claims which contains greater than 3.0% theanine by weight of the total tea solids and wherein the weight ratio of theanine to total polyphenols is less than 1:6.

11. A tea product according to claim 10 which contains greater than 3.1% theanine by weight of the total tea solids.

12. A tea product according to claim 10 or claim 11 wherein the weight ratio of theanine to total polyphenols is from 1:8 to 1:20.

## Patentansprüche

1. Verfahren zur Herstellung von Teeprodukten, wobei das Verfahren umfasst:
a) Bereitstellen frischer ganzer Teeblätter,
b) Überführen der Teeblätter in eine Presse und Auspressen der Blätter, wodurch Teesaft und Blattrückstand hergestellt werden, während Dampf auf die Außenseite der Presse angewandt wird, so dass der Dampf mit dem Saft, während er die Presse verlässt, in Kontakt gelangt,
c) Auffangen des Safts und
d) Verarbeiten des Blattrückstandes, um Schwarztee herzustellen.

2. Verfahren nach Anspruch 1, wobei die frischen ganzen Teeblätter vor dem Pressen keinem Schritt des physikalischen Welkens unterworfen werden.

3. Verfahren nach Anspruch 1 oder 2, wobei die frischen ganzen Teeblätter Material von Camellia sinensis var. assamica umfassen.

4. Verfahren nach irgendeinem der Ansprüche 1 bis 3, wobei der Dampf den Saft auf eine Temperatur von mindestens 70°C erhitzt.

5. Verfahren nach Anspruch 4, wobei der Dampf den Saft auf eine Temperatur von 75 bis 80°C erhitzt.

6. Verfahren nach irgendeinem der Ansprüche 1 bis 5, wobei die Temperatur des Blattrückstands innerhalb der Presse weniger als 60°C beträgt.

7. Verfahren nach Anspruch 6, wobei die Temperatur des Blattrückstands innerhalb der Presse weniger als 55°C beträgt.

8. Verfahren nach irgendeinem der Ansprüche 1 bis 7, wobei die Menge des ausgepressten Safts von 50 bis 500 ml pro kg der frischen ganzen Teeblätter beträgt.

9. Verfahren nach Anspruch 8, wobei die Menge des ausgepressten Safts von 100 bis 400 ml pro kg der frischen ganzen Teeblätter beträgt.

10. Grüntee-Saft, erhältlich gemäß dem Verfahren nach irgendeinem der vorhergehenden Ansprüche, der mehr als 3,0% Theanin, bezogen auf das Gewicht der gesamten Teefeststoffe, enthält und wobei das Gewichtsverhältnis von Theanin zu gesamten Polyphenolen weniger als 1:6 beträgt.

11. Teeprodukt nach Anspruch 10, welches mehr als 3,1% Theanin, bezogen auf das Gewicht der gesamten Teefeststoffe, enthält.

12. Teeprodukt nach Anspruch 10 oder 11, wobei das Gewichtsverhältnis von Theanin zu gesamten Polyphenolen von 1:8 bis 1:20 beträgt.

## Revendications

1. Procédé de production de produits de thé, le procédé comprenant :
a) la fourniture de feuilles de thé entières fraîches ;
b) la disposition des feuilles de thé dans une presse, et la pression des feuilles, produisant par-là du jus de thé et un résidu de feuilles, tout en appliquant de la vapeur vers l'extérieur de la presse, de sorte que la vapeur entre en contact avec le jus lorsqu'il quitte la presse ;
c) le recueil du jus ; et
d) le traitement du résidu de feuilles pour produire du thé noir.

2. Procédé selon la revendication 1, dans lequel les feuilles de thé entières fraîches ne sont pas soumises à une étape de séchage à l'air physique avant pression.

3. Procédé selon la revendication 1 ou la revendication 2, dans lequel les feuilles de thé entières fraîches comprennent un matériau de *Camellia sinensis* var. *assamica.*

4. Procédé selon l'une quelconque des revendications 1 à 3, dans lequel la vapeur chauffe le jus à une température d'au moins 70°C.

5. Procédé selon la revendication 4, dans lequel la vapeur chauffe le jus à une température de 75 à 80°C.

6. Procédé selon l'une quelconque des revendications 1 à 5, dans lequel la température du résidu de feuilles à l'intérieur de la presse est inférieure à 60°C.

7. Procédé selon la revendication 6, dans lequel la température du résidu de feuilles à l'intérieur de la presse est inférieure à 55°C.

8. Procédé selon l'une quelconque des revendications 1 à 7, dans lequel la quantité de jus exprimé est de 50 à 500 ml par kg des feuilles de thé entières fraîches.

9. Procédé selon la revendication 8, dans lequel la quantité de jus exprimé est de 100 à 400 ml par kg des feuilles de thé entières fraîches.

10. Jus de thé vert pouvant être obtenu par le procédé selon l'une quelconque des revendications précédentes qui contient plus de 3,0 % de théanine en masse des matières solides de thé totales et dans lequel le rapport massique de théanine aux polyphénols totaux est inférieur à 1:6.

11. Produit de thé selon la revendication 10, lequel contient plus de 3,1 % de théanine en masse des matières solides de thé totales.

12. Produit de thé selon la revendication 10 ou la revendication 11, dans lequel le rapport massique de théanine aux polyphénols totaux est de 1:8 à 1:20.
